# EUROPEAN PATENT APPLICATION

(11) **EP 1 946 985 A1**
(43) Date of publication of application: **23.07.2008**
(21) Application number: 06077316.5
(22) Date of filing: 22.12.2006
(51) Int. Cl.: B60W 20/00, B60W 10/08, B60W 10/30

(54) **Controller and method to control electric power generating and/or consuming components of a hybrid vehicle**

(71) Applicant: Nederlandse Organisatie voor toegepast- natuurwetenschappelijk onderzoek TNO, 2628 VK The Hague (NL)
(72) Inventor: Foster, Darren Leigh, 2803 DK Gouda (NL)
(74) Representative: van Loon, C.J.J.

(57) **Abstract**

Controller configured to control electric power generating and/or consuming components of a hybrid vehicle, wherein the controller (1) comprises a plurality of control modules (11, 12, 13) that are configured to control the components (C) to carry out a plurality of respective electric power generating and consuming functions, for example:
-a Charging function to generate electrical energy by driving an electric power generator of the hybrid vehicle using an engine of the vehicle;
-a Boost function to increase torque using an electromotor;
-a Regenerative braking function, which recovers vehicle kinetic energy by driving an electric power generator without using the engine; and
-an eDrive function wherein the electromotor uses electric energy to provide torque, particularly without support from the engine;

wherein each control module (11, 12, 13) is associated with one or more respective input variables, wherein the control modules (11, 12, 13) are associated with different priorities with respect to each other, wherein each of the control modules (11, 12, 13) is configured to indicate a demand for execution of the respective function depending on the one or more respective input variables,
wherein, in the case that more than one module (11, 12, 13) indicates a demand for its function's execution, the controller (1) is configured to allow the control module (11, 12, 13) to execute its function that has the highest priority of those control modules indicating the demand for their function's execution.

## Description

The present invention relates to a controller configured to control electric power generating and/or consuming components of a hybrid vehicle. The invention also relates to a method to control electric power generating and/or consuming components of a hybrid vehicle.

A problem of known hybrid control systems is that they are limited in flexibility. For example, taking a hybrid control system having two virtual functions "E-drive" and "Charge", the functions are typically dependent on drive power and battery state. Therefore both functions need to be aware of these variables, and need to deal with all possible combinations. Additionally, in state space, the functions can overlap. Also, known control systems designed to control parallel-hybrid types of vehicles are not suitable to control serial-hybrid type vehicles and vice-versa.

As an example, US 2003/0098187 (Philips et al.) discloses a vehicle system controller for a parallel hybrid electric vehicle having subsystem controllers, wherein the controller comprises a state machine having a plurality of predefined states representing vehicle operating modes, a set of rules defining logical relationships between each of the plurality of predefined states, and a set of commands unique to each state supplied to the subsystem controllers to achieve desired vehicle functionality within the states and to transition between the plurality of predefined states. Therein, the plurality of predefined states representing operating modes are prioritised according to operator demands, energy management requirements and system fault occurrences. The set of rules comprises a large number of transition flags that can be true and false, depending on the current vehicle operating status, operator demand and system fault status. During operation, the transitions are prioritised.

The known system controller and method lead to a complex, dedicated vehicle control algorithm having a state machine, an example being shown in Fig. 2 of US 2003/0098187, that is specifically adapted to a specific parallel hybrid electric vehicle. Therein, all possible combinations of transitions (Flags) have to be known, and each desired result/outcome of each combination of transitions has to be worked out to provide a proper vehicle operation. For example, the state machine will transit from an Engine Drive state into a Charge state in case that the condition "Charge_Flag & Isa_disabled_Flag&(Disallow_En_Mgt_Flag || Max_Source_Current_Zero_Flag)& IKey_Off_Or_Stall_Flag & IRegen_Flag & IBoost_Flag" is met. According to another example, if the state machine in the control algorithm is in a Boost state and the vehicle operator removes demand for acceleration, the Booste_Flag becomes false. As a result, the known state machine transitions to the Engine_Drive state, but only if neither the Energy_Mgt_Flag nor Key_Off_Or_Stall_Flag were true. This known controller is not simply adaptable to a different hybrid vehicle that might require addition and/or deletion of certain transitions (due to different vehicle components), since such adaptation would require that all rules have to be rewritten and verified. Besides, faults in programming the state machine (such as forgetting to implement an unexpected combination of transitions) can be easily made, particularly in case a complex vehicle having a large number of components is to be controlled, leading to a low reliability of the controller, and high validation requirements and costs.

The present invention aims to alleviate the above-mentioned problems. Particularly, the invention aims to provide a controller and method that are flexible, and can be applied on different hybrid systems without having to implement a full redesign of the controller.

To this aim, according to an embodiment of the invention, there is provided a controller configured to control electric power generating and/or consuming components of a hybrid vehicle, wherein the controller comprises a plurality of control modules that are configured to control the components to carry out a plurality of respective electric power generating and consuming functions, for example:
- a Charging function to generate electrical energy by driving an electric power generator of the hybrid vehicle using an engine of the vehicle;
- a Boost function to increase torque using an electromotor;
- a Regenerative braking function, which recovers vehicle kinetic energy by driving an electric power generator without using the engine; and
- an eDrive function wherein the electromotor uses electric energy to provide torque, particularly without support from the engine;
wherein each control module is associated with one or more respective input variables, wherein the control modules are associated with different priorities with respect to each other, wherein each of the control modules is configured to indicate a demand for execution of the respective function depending on the one or more respective input variables,
wherein, in the case that more than one module indicates a demand for its function's execution, the controller is configured to allow the control module to execute its function that has the highest priority of those control modules to indicate the demand for their function's execution.

Thus, the controller is of a modular design and can be reconfigured or adapted in a relatively simple manner to control different hybrid vehicles. Besides, the present embodiment provides a high degree of orthogonallity between the various power related functions of a hybrid vehicle, via the control modules, wherein hybrid functions do not overlap in a state space that is provided by/embedded in the controller configuration.

In an embodiment, a control module can be configured to indicate demand of the function by automatically requesting execution of the respective function depending on the one or more respective input variables.

In an alternative and preferred embodiment, for example, the control module can be asked (by the controller or a scheduler thereof) first, whether respective function is to be executed, wherein as a result the control module can indicate demand of the function (for example by indicating a request execution of the respective function) depending on the one or more respective input variables.

A central controlling part of the controller does not have to be particularly adapted to be applied in various types of hybrid vehicles anymore, following embodiments of the present invention. In an embodiment, the controller, including the control modules, are provided by machine readable instructions, for example processor or computer code to be executed by a suitable processor or computer unit. For example, the machine readable instructions can be implemented in a suitable controller. In a preferred embodiment, the controller is a hardware controller, or is an ECU (electronic controller unit).

Also, according to an embodiment of the invention, there is provided a method to control electric power generating and/or consuming (i.e. using) components of a hybrid vehicle, the method utilizing a controller according to the invention, wherein one or more of the control modules can indicate a demand for execution of the respective function depending on the one or more respective input variables, wherein, in the case that more than one module indicate demand for its function's execution, the control module that has the highest priority of those control modules indicating demand for their function's execution, is allowed to execute that function.

For example, a control module can be asked by a scheduler whether or not the respective function is to be carried out, wherein the enquiry sets the control module to check its input parameters and, depending on the input parameters, can request (confirm, indicate) that the respective function is to be carried out or not (deny).

Also, an embodiment provides digital machine readable instructions, particularly software code, for example a computer program, configured to cause a machine to carry out a method according to the invention when executed by the machine, particularly to provide a controller according to the invention. Also, for example, according to an embodiment of the invention there can be provided a data carrier carrying these digital machine readable instructions.

Further advantageous embodiments are described in the dependent claims. The invention will be further elucidated by means of exemplary embodiments with reference to the accompanying drawings in which:
Figure 1 schematically depicts part of a hybrid vehicle;
Figure 2 schematically depicts a control system according to an embodiment of the invention;
Figure 3 is a flow chart of a method according to an embodiment of the invention; and
Figure 4 is a graph of Fuel consumption as function of Electric drive limit.

Equal or corresponding features are denoted by equal or corresponding reference signs in the present application.

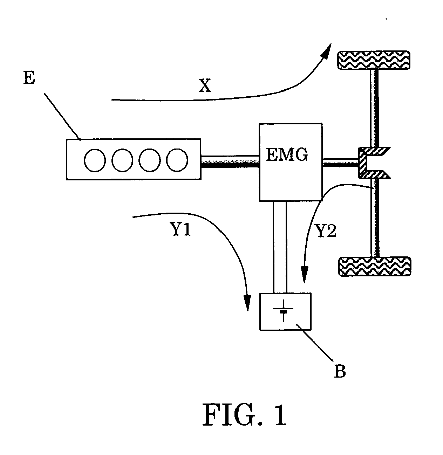

Figure 1 schematically depicts part of a hybrid vehicle. The configuration of hybrid vehicles as such is known to the skilled person and will therefore only be explained in general. The vehicle comprises a hybrid powertrain comprising an engine E and an electromotor EMG, that can be coupled to vehicle wheels to provide torque to the wheels independent of each other or at the same time. An arrow X indicates a flow of torque energy. Also, a battery (accumulator) B is provided to provide electric energy. Charging of the battery can be achieved in various ways. For example, the powertrain can be in a Charge state, wherein the electromotor EMG functions as an electric generator and is driven by the engine to charge the accumulator/battery B (a resulting energy path is indicated by an arrow Y1 in Fig. 1). For example, the electromotor EMG (or powertrain) can be provided with an inverter to convert direct current into alternating current and vice-versa. Besides, the vehicle can be configured to provide one or more Regenerative states to generate electric power for charging the battery B. Usually, such regenerative states are available during a vehicle braking or vehicle deceleration process, for example in the case that the electromotor/generator EMG is driven by the wheels (a resulting energy path is indicated by an arrow Y2 in Fig. 1). One hybrid vehicle can comprise several energy regeneration systems, for example a regenerator using the electromotor EMG to generate electric power, an electromagnetic or hydraulic retarder, and/or a conventional friction brake that is being hydraulically or pneumatically driven. Besides, the hybrid powertrain can be of a serial hybrid type, a parallel hybrid type or a combination thereof. Preferably, the powertrain comprises a single electromotor EMG that also functions as electric power generator, as in the Fig. 1 embodiment. Alternatively, an electromotor and separate electric generator can be included in the powertrain. Also, the engine E can be an internal combustion engine, for example to combust gasoline, diesel, hydrogen and/or other fuels, or other types of engines. The skilled person will appreciate that the hybrid vehicle generally comprises various other components, for example a transmission, one or more clutches to engage/disengage the engine E and electromotor EMG, converter, as well as sensors S to determine status of various components, for example to determine a battery state of charge (SOC) of the battery, to determine amounts of power provided or requested by the powertrain, to determine operator (driver) demands, and for providing information regarding other parameters, for example thermal variables relating to vehicle cabin temperature and/or exhaust catalyst system.

In an embodiment, the hybrid vehicle can be in various hybrid power states, relating to generation and consumption (use) of the electric power, for example:
- a Charging state, wherein electrical energy is being generated by driving the electric power generator EMG using the engine;
- a Boost state to increase engine E torque using the electromotor EMG;
- a Regeneration state to generate electrical energy by driving an electric power generator (for example the electromotor EMG) without using the engine E;
- an eDrive state wherein the torque is generated entirely by the electromotor E and not by the engine E.

Other hybrid power states can be available as well, for example a standby state wherein the powertrain is on standby (for example, when the vehicle stands still).

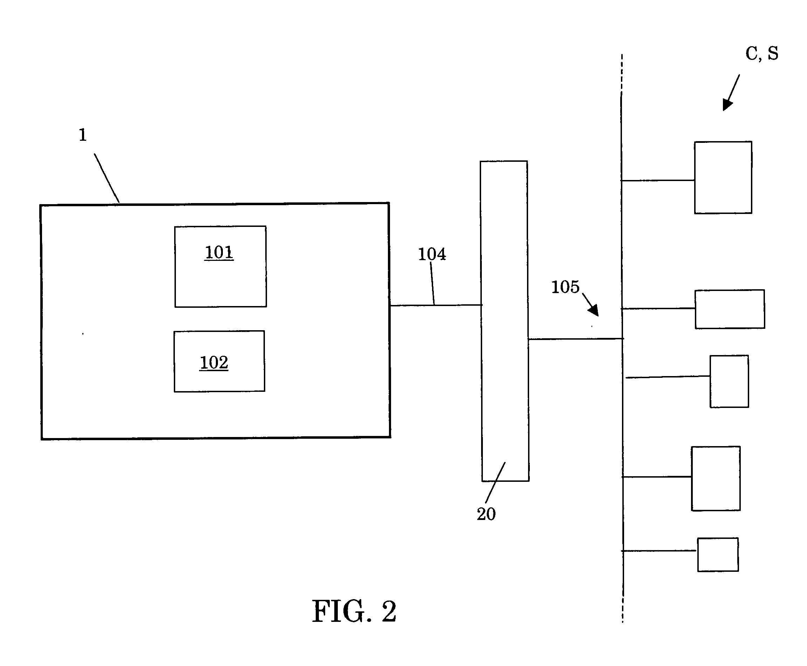

Figure 2 schematically depicts a non-limiting embodiment of a control system comprising a controller 1, configured to control various electric energy consuming and/or generating components C (i.e. accumulator related components) of a hybrid vehicle. As follows from the above, these components can include: one or more electromotors EMG, one or more electric power generator systems-for example including the engine M to drive an electric power generator EMG-, one or more energy regenerators (see above), one or more battery chargers to charge at least one battery B, and/or other components.

The controller 1 is at least configured to handle power control (i.e. distribution of available electric power), based on certain controller input variables regarding the availability of electric power and the amount(s) of power that is/are needed by certain of the components C.

In the present embodiment, the controller 1 is connectable to and/or comprises the interfacing structure (also called the "hardware interface layer") 20 to provide communication between the controller 1 and respective remote vehicle components C. For example, ccommunication may be single sided (REQ) or handshaked (REQ/ACK), or be of a different format. In the present embodiment, there is provided a first communication system 105 that communicatively interconnects the components C and the interface structure, for example via wired and/or wireless communication means, a vehicle data communication network or in an other manner as will be appreciated by the skilled person. Also, in the present embodiment, there is provided a communication path 104 that communicatively interconnects the interface structure 20 and controller 1, to allow data communication there-between. Alternatively, the interface 20 can be integral part of the controller 1, or there can be provided a plurality of suitable data interfaces to allow communication between the controller 1 and remote vehicle components C.

Communication between controller 1 and vehicle components C can include transmission of control information from the controller 1 to respective vehicle components, to control (for example activate, deactivate and/or change operation of) those components C. Also, the communication can include transmission of vehicle power status information to the controller 1. The mentioned status information can include various power related variables, for example the variables: a battery state of charge, vehicle drive power, brake regenerator power, retarder regenerator power, and/or other power related variables. These variables can be dependent on driver related actions, driving conditions, driving as such, as will be appreciated by the skilled person. For example, vehicle power status information can be generated by respective vehicle components C, sensors S, a vehicle speed controller (not shown) configured to request that the powertrain provides a certain amount of drive power to attain or maintain a certain vehicle speed, and/or other vehicle parts or systems.

For example, the interfacing structure 20 is configured to receive power status information (for example from the respective vehicle parts) and to transmit received status information to the controller 1, particularly in a format that can be read by the controller 1. For example, the interfacing structure 20 is preferably configured to translate vehicle status information into specific input variables to be received by the controller 1.

In an embodiment, the mentioned power status information can include various types of information. For example, in the present embodiment, the vehicle can be configured to generate vehicle power status information, regarding status of components C (the status particularly comprising electric power related information with respect to the component C). For example, one or more of these components C can be configured to generate electric power related status information, for example information including an amount of electric power that is required or requested by the respective component C during operation, depending for example on the state and operation of the vehicle.

Besides, as mentioned above, there can be provided one or more sensors S to determine power status of various components, for example to determine a battery state of charge (SOC) of the battery B. For example, one or more of these sensors S can be part of the respective vehicle components C, or be part of dedicated vehicle control systems (for example a vehicle speed controller). For example, a sensor S can be part or a local component-controller, wherein the local controller can process a sensor signal and transmit a processed sensor signal, or sensor signal related information, to the hybrid controller 1. Each sensor S can also be configured to generate power related status information regarding the parameter(s) measured or assessed by that sensor S.

For example, a battery state of charge sensor S can provide information regarding the battery state or charge, and can preferably generate information including a request for the battery B to be charged in the case the sensor S detects or determines that the battery state of charge has reached a relatively low level, or is expected to reach such low level within a short amount of time.

In a further embodiment, for example, there can be two levels: a first level (for example in a local batterycontroller), wherein a charge controlling function is available which determines if charging is desired and wherein a warning message, for example "load now or else the battery might be damaged" can be generated. A second level can be a safety function, which may be part of the hardware interface layer 20.

Besides, the battery state of charge sensor S can provide information that the battery does not have to be charged in the case the sensor S detects or determines that the battery state of charge has reached a relatively high charging level. Besides, a vehicle speed sensor can be available, for example as part of a vehicle control unit, to provide information regarding the actual vehicle speed.

The controller 1 can be configured in various ways. Preferably, the controller 1 is a provided with machine readable instructions, particularly a set of digital code or control algorithm, configured to cause the controller 1 to carry out a method as will be described below when executed by the controller. The controller 1 can comprise suitable hardware, for example one or more processors 101 to execute the instructions, a data memory 102 that can be accessed by the one or more processors 101, for example to hold at least part of the instructions and/or instruction-related variables, as will be appreciated by the skilled person.

In a preferred embodiment, the controller 1 comprises a plurality of substantially autonomously operating control modules 11, 12, 13, that are configured to control the components C to carry out a plurality of respective electric power generating and consuming/using (virtual) functions, for example:
- a Charging function to generate electrical energy by driving an electric power generator of the hybrid vehicle using an engine of the vehicle;
- a Boost function to increase torque using an electromotor;
- a Regeneration function to generate electrical energy by driving an electric power generator without using the engine; and
- an eDrive function wherein the electromotor uses electric energy to provide torque without support from the engine.

In a preferred embodiment, the components C can be controlled by the modules 11, 12, 13 indirectly via the interface layer 20, wherein the control modules 11, 12, 13 can control the interface layer 20 (or respective interface layer parts being associated with the respective functions), and the respective interface layer parts can control the components C, based on instructions received by the control modules 11, 12, 13. Thus, the interface layer 20 can control the components C, under management of the control modules 11, 12, 13.

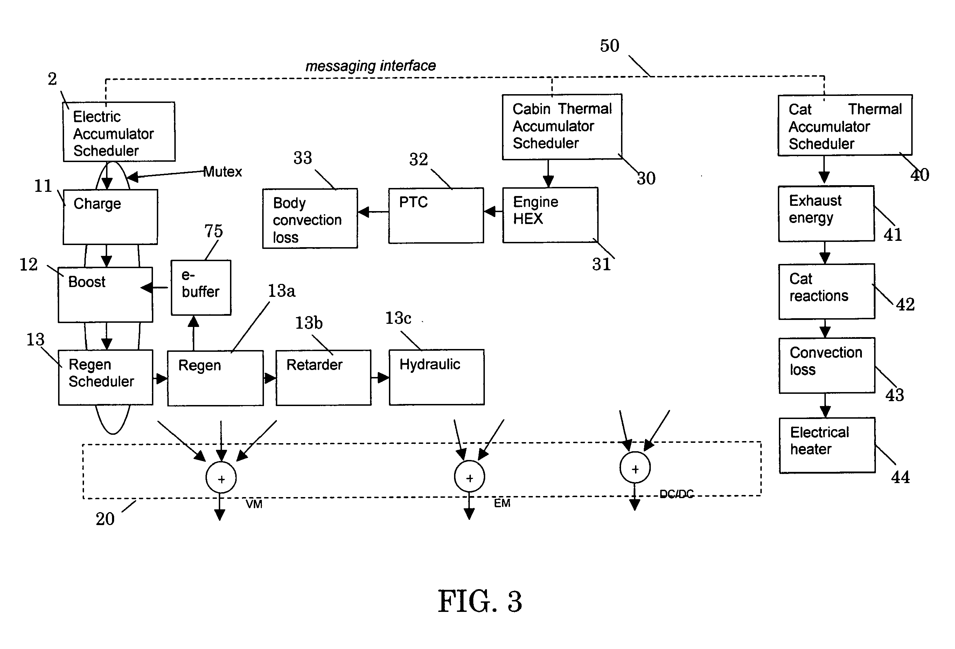

In the present embodiment, these control modules 11, 12, 13 are integrated or implemented in the controller 1, i.e., in the above-mentioned machine readable instructions. Figure 3 shows a flow chart of an embodiment of a method that is carried out by the controller, the flow chart indicating the control modules 11, 12, 13.

As a non limiting example, the present embodiment comprises a first control module 11 to control a Charge function, a second control module to control a Boost function, and a third control module 13 to control electric power Regeneration. Other control modules can be added to the controller 1 is a simple manner, for example an eDrive control module (not shown) relating to the eDrive function.

Each control module 11, 12, 13 is preferably associated with one or more respective input variables (the input variables which can be received by the controller 1 via the interfacing structure, as has been described above). For example, the first control module 11 can be associated with a battery-state-of-charge variable, the second control module 12 can be associated with a drive-power variable and the third control module can be associated with one or more regenerator-power variables. Also, the control modules 11, 12, 13 are associated with different priorities with respect to each other. For example, these priorities and the mentioned variables can be stored in the memory 102, to be assessed (read and/or written) by a processing part 101 of the controller
1. Each of the control modules 11, 12, 13 is preferably configured to request execution of the respective function depending on the one or more respective input variables (i.e. to provide information to indicate that the function is in demand, depending on the input variables).

As has been mentioned above, for example, in an embodiment, a control module 11, 12, 13 can be configured to automatically request execution of the respective function depending on the one or more respective input variables. In an alternative and preferred embodiment, for example, the control module 11, 12, 13 can be asked (for example by a scheduler 2 of the controller) periodically, whether the respective function is to be executed, wherein as a result the control module 11, 12, 13 can check its input parameters and, depending on those parameters, can confirm or deny (in a reply) that the function is to be executed, via a suitable indication.

In the case that only one of the control modules 11, 12, 13 requests its function's execution, the controller 1 can allow that control module to execute its function. However, in a further embodiment, this may depend on the use of an energy budget, as will be explained below (for example, optionally, the controller 1 can check whether the control module has used up a respective energy budget, and can deny the module to execute the function in case the respective energy budget has been used up).

The controller 1 is configured such that in the case that more than one module 11, 12, 13 requests its function's execution, the controller 1 is configured to allow the control module 11, 12, 13 to execute its function that has the highest priority of those control modules requesting their function's execution. For example, the controller 1 can be configured such that different controller modules 11, 12, 13 can request execution of their respective function at the same time, independently from each other, wherein the controller 1 is configured to allow only one of the control modules 11, 12, 13 to execute its function at a time (and optionally, based on the usage of an energy budget of the control module).

Each of the control modules 11, 12, 13 can be configured to execute its function (particularly by transmitting suitable control information to its respective vehicle component(s) via respective interface layer parts, i.e. by transmitting suitable control information to the interface layer 20 in order to have the interface layer 20 controlling the component(s) C to execute the function), depending on whether such execution is being allowed by the controller 1. As an example, in the present embodiment, in the case that first module 11 is being allowed to execute its function, that module with transmit information via the interface 20 to bring the vehicle in the charging state, wherein respective vehicle components E, EMG charge the battery B. In the case that second module 12 is being allowed to execute its function, that module 12 with transmit information via the interface 20 to bring the vehicle in the Boost state, wherein the electromotor EMG provides additional torque to the powertrain. In the case that third module 13 is being allowed to execute its function, that module 13 with transmit information via the interface 20 to bring the vehicle in the regeneration state, wherein respective vehicle components M, EMG regenerate electric power. In the case that an eDrive module is being allowed to execute its function, that module with transmit information via the interface 20 to bring the vehicle in the eDrive state, wherein only the electromotor EMG is active (not the engine E) provide torque to the vehicle.

Preferably, the controller 1 comprises a main scheduler 2, preferably being a mutex scheduler 2, that is configured to allow only one of the control modules 11, 12, 13 to execute its respective function at a time. In the present embodiment, the mutex scheduler 2 can simple be embedded in/be part of the mentioned machine readable instructions of the controller 1.

The mutex scheduler 2 can operate in various ways. For example, in an embodiment, the mutex scheduler 2 can be configured to select from a number of control modules 11, 12, 13 demanding that their function is carried out, only the control module 11, 12, 13 having the highest priority to have its function carried out. Also, in an embodiment, the mutex scheduler 2 can be configured to disallow a one control module to have its function carried out, in the case that an other of the control modules, having a higher priority than the former module, is selected to have its function carried out.

In the present embodiment, preferably, the interfacing structure 20 can provide transmission of control information (i.e. translate the control information into/towards the function space) from each of the control modules 11, 12, 13 to respective vehicle components and transmission of power status information from the vehicle component to the control modules 11, 12, 13, the interfacing structure 20 being configured to translate power status information (received via the communication means 105) into the specific input variables to be received by the respective control modules 11, 12, 13. For example, the interface 20 can be configured to send battery-state-of-charge information (particularly after being translated into an input variable) to the Charge module 11 of the controller 1 only, and not to any of the other two control modules 12, 13. Also, for example, the Charge control module 11 can be configured to accept and/or operate only the input variable(s) that is/are associated therewith, for example only the battery-of-charge variable. The interface 20 can be configured to send drive-power information (particularly after being translated into an input variable) to the Boost module 12 only, and not to any of the other two control modules 11, 13. Regenerator information, that is received by the interface 20, can be translated and send to the Regenerator control module 13 only, and not to any of the other two control modules 11, 12. Besides, in an embodiment, one or more of input variables can be transmitted to different control modules, to be accepted thereby. For example, a drive-power variable, associated with an amount of total electric power is needed by the powertrain to drive the vehicle, can be transmitted to both a Boost control module 12 and an e-drive control module (not specifically shown in Fig. 3).

In an embodiment, each control module 11, 12, 13 can be configured to generate a respective activation request in the case that respective one or more input variables indicate that the respective function is in demand. For example, the controller 1 (particularly the mutex scheduler 2 thereof) can be configured to continuously or semi-continuously search for such activation requests, and to keep searching after having encountered such an request.

Besides, in an embodiment, each control module 11, 12, 13) can be configured to generate a respective activation request in the case that respective one or more input variables indicate that the respective function is in demand, wherein the controller 1 (i.e. mutex scheduler 2) can be configured to be triggered by each generation of an activation request to determine, whether or not activation of the requested function is allowed based on presence of activation requests of the other control modules and based on the priorities of the control modules.

In the present embodiment (see Fig. 3), the Regenerating-module 13 includes a plurality of sub-modules relating to respective sub-functions, wherein the sub-modules are preferably prioritised with respect of each other whereas the sub-functions can be run in parallel. For example, a first submodule 13a can be configured to control a first regeneration function that includes driving the electromotor/generator EMG to generate power. A second submodule 13b can control a second regeneration function including operation of a dedicated retarder (not shown) to retard the vehicle and generate electric power. A third submodule 13c can be configured to execute a regenerating function resulting from a mechanical (for example hydraulic or pneumatic) brake system. These submodules 13a, 13b, 13c do not have to be prioritized with respect of each other, and the Regeneration module can be provided with a scheduler to allow shared (simultaneous) execution of the functions of the submodules 13a, 13b, 13c, if requested by these submodules. In a more preferred embodiment, the submodules 13a, 13b, 13c are prioritized with respect to each other, but might operate at the same time, depending for example on power requests and available power. In that case, for example, in case the highest priority submodule 13a is allowed all available power, the remaining submodules 13b, 13c do not gain any power. On the other hand, in that case, when the higher priority submodule 13a does not use up all available power, a lower priority submodule 13b can be provided with a remaining power part etc. Besides, as is shown in Fig. 3, there can be provided an energy buffer 75, buffering energy from a submodule 13a.

For example, the interface 20 can expose further vehicle functionality, with additional schedulers per energy buffer of energy forms other than electric. The different power requests from each scheduler and associated functions can be combined in the interface layer 20 to determine component control signals.

In a further embodiment, the controller 1 is configured to assess and control thermal energy buffers available on the vehicle as well. For example, the vehicle can include various heat sources, for example the engine (Engine HEX 31) and one or more electric heaters (for example a heater or PTC thermistor heating element 32 to heat the driver cabin, a heater 44 to heat part of an exhaust catalyst system). Also, the vehicle can loose heat in various ways, for example heat energy 41 via the exhaust, via heat radiation and convection 33 from a body of the vehicle, convection loss 43 via the exhaust catalyst system, heat loss 42 via catalytic chemical reactions, and/or in a different manner.

In an advantageous embodiment, the controller 1 can also be configured to assign or associate an energy budget to/with each of the functions (i.e., to the control modules 11, 12, 13). For example, the controller 1 is configured to alter an amount of energy that is available to that function in the case that the function has used up at least part of its energy budget. Also, for example, the controller 1 can be configured to allow or deny execution of a function depending on an amount of energy used by that function. For example, the energy budgets of the various functions can be stored in the memory part 102 of the controller 1. In a further embodiment, the controller 1 is configured to calculate or estimate each electric energy budget from history (for example from previous driving periods before a present driving period) and/or using expected future values. In a further embodiment, the controller 1 is configured to allocated electric power budgets to the different functions (or control modules 11, 12, 13). Preferably, the controller 1 can be configured such that during operation, when a function (or control module 11, 12, 13) has used up its budgetary value or energy quantum, that function is removed from scope, for example, removed from a run list to a wait list.

For example, the controller 1 can deny a control module 11, 12, 13 to execute its respective function, in the case the control module 11, 12, 13 has used up its energy budget. Also, in that case, for example, the priority of the respective control module 11, 12, 13 can be automatically decreased by the controller 1, or the respective function is simply not carried out anymore. The skilled person will appreciate that this process may take place through a multitude of methods, with either fine or coarse grained quanta. Also, herein, electric power allocation itself may be dependent on a function's budget as such (the budget does not have to be part of a function, but the function can be related to a budget). For example, allocation of available power to a module 11, 12, 13 can be proportional to the amount of budget that has been used, for example in a linear (i.e. half the budget being used by a module 11, 12, 13 means half the power being allocated to that module 11, 12, 13) or non-linear fashion.

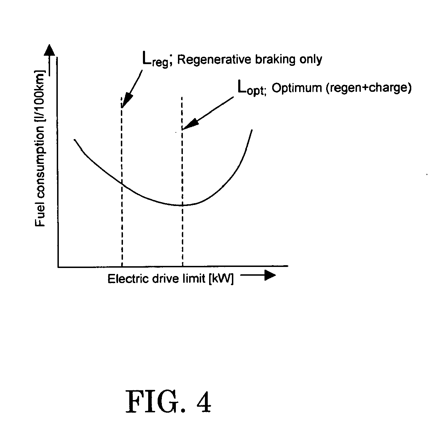

Therefore, in order to maintain an optimal fuel economy, a balance can be provided between electric power source-functions and electric power source sink-functions, by providing the concept of an energy budget per function. For example, the function (module) e-drive provides a fuel economy benefit up to an energy usage limit value, after which fuel economy drops significantly. The present embodiment also assists the engineer in dealing with this type of highly complex system. Figure 4 depicts en example of a graph of engine Fuel consumption (1/100 km) as function of Electric drive limit (kW). The electric drive limit is the electric power budget that is available for the vehicle to be in the eDrive state. An optimum electric drive limit is indicated by dashed line Lₒₚₜ. In that case, fuel consumption is at a minimum and the Charge function can be used additional to the Regeneration function (in a mutually exclusive manner based on their priorities) to provide energy for the e-drive function.. Also, a second, lower, electric drive limit state L_{reg} is indicated, wherein fuel consumption is significantly higher than at the optimum electric drive limit, in which case for example only the Regenerating function can be available. In other words, a driving condition when only Regen is being used can result in L_{reg}. In case E-drive has access to two sources via the budgets, the advantage of E-drive can be increased.

Thus, as follows from Fig. 4, to improve vehicle fuel consumption, a charge function can be used additional to a regeneration function to provide energy for the e-drive function. For example, all hybrid power functions can be limited, in a similar manner, with a minimum and maximum power determined to guarantee a minimum path efficiency.

The controller 1 can also be provided with one or more thermal buffer control modules or schedulers 30, 40 for controlling production and loss of heat in an energy efficient manner, for example a cabin thermal accumulator scheduler 30 (relating to heat accumulation) and a catalist thermal accumulator scheduler 40 (also relating to heat accumulation). To this aim, the controller 1 is preferably configured to adjust priorities of the electric power related control modules 11, 12, 13 based on changing thermal demands. For example, the thermal buffer schedulers 30, 40 can be configured to cooperate with the main scheduler 2 to increase the priority of the Charge module 11, so that the chance that the engine is activated to charge the battery B is increased, in the case that the thermal buffer of the exhaust catalyst system requires supply of heat (i.e., in the case the temperature of the exhaust catalyst system has dropped below some predetermined or preferred minimum value). Similarly, the thermal buffer schedulers 30, 40 can be configured to cooperate with the main scheduler 2 to increase the priority of an eDrive or Boost module, so that the chance that an active engine is deactivated, in the case that the thermal buffer of the exhaust catalyst system requires heat loss (i.e., when the temperature of the exhaust catalyst system is higher that some predetermined or preferred maximum value). Cooperation between the main scheduler 2 and the thermal schedulers 30, 40 can include data communication via suitable communication means, for example via a messaging interface 50 allowing data transmission between the schedulers and/or in a different manner.

During use of the embodiment of Figures 1-3, one or more of the control modules 11, 12, 13 can request execution of the respective function depending on the one or more respective input variables. In the case that more than one module 11, 12, 13 requests its function's execution, the control module 11, 12, 13 that has the highest priority of those control modules requesting their function's execution, is allowed to execute that function. Also, preferably, only one of the control modules 11, 12, 13 is allowed to execute its function at a time, by the electric accumulator scheduler 2. Also, interfacing control information is being transmitted from the control modules 11, 12, 13 to respective vehicle components C and power status information to the control modules 11, 12, 13, via the interfacing structure 20 which translates the information into the specific input variables to be received by respective control modules 11, 12, 13.

As follows from the above, during use, in an embodiment, a control module 11, 12, 13 can generate a respective activation request in the case that respective one or more input variables indicate that the respective function is in demand, wherein the activation request is independent of the status of the other control modules. Besides, in an embodiment, an activation request of a control module 11, 12, 13 can trigger the main scheduler 2, wherein the triggered scheduler 2 can determine whether or not activation of the requested function is allowed based on presence of activation requests of the other control modules and based on the different priorities of the control modules. Herein, the method can also include the mutual excusive scheduling of a plurality of accumulator related functions, particularly various regenerating functions relating to respective submodules 13a, 13b, 13c, wherein at least one of these functions includes a plurality of sub-functions, wherein the method preferably includes a parallel scheduling of these sub-functions.

In the case that a control module 11, 12, 13 has become active, it controls the respective components to carry out the respective function. Also, a module 11, 12, 13 can be configured to return to an inactive state automatically, for example in the case that the function is not in demand anymore, for example based on respective information received from certain vehicle component(s) via the interfacing structure 20.

Therefore, during use, the controller 1 treats different electric power as separate entities that are only defined by the state variables of which the function (i.e. the respective control module 11, 12, 13) is dependent, i.e. the function "e-drive" is driven by variable "drive power", and the function "charge" is controlled by variable "battery state of charge". Each function (i.e. the respective control module 11, 12, 13) has been given a priority. Each function (i.e. the control module 11, 12, 13) checks its input variables (as instructed by the scheduler 2), and the function (control module 11, 12, 13) with the highest priority requests execution runs. For example, if the e-drive control module is active and battery state of charge (SOC) is high, and the e-drive control module has a lower priority than the charge control module 11, the function "charge" does not run until SOC drops below a certain limit. Until then, the e-drive control module takes over control. When the SOC drops below a certain critical value, it requests control, and as the charge control module 11 has a higher priority, it pre-empts "e-drive", thereby taking control of the system. In this way, virtual functions are reusable and orthogonal to the greatest possible extent. Priorities of the control modules 11, 12, 13 are not necessarily static, but may be changed in real time, for example by other software elements (such as thermal buffer related controller elements).

For example, as follows from the above, during use, the method preferably includes assessment of thermal energy buffers available on the vehicle, wherein priorities of the control modules 11, 12, 13 are at least partly made dependent of thermal demands relating to those thermal bufffers.

During use, for example, a main scheduling part 2, 11, 12, 13 of the controller 1 can represent/relate to the enery buffer "battery", which can represents one branch of the control tree (see Fig. 3). As follows from the above, a multiplicity of energy buffers can be available on board the hybrid vehicle, e.g. thermal buffer of the exhaust aftertreatment system. Preferably, as is explained above, the controller 1 is configured sich that different buffers can interact with one another (e.g. through a model/mapping function). In an embodiment, the described control system can be energy and power centric, so that any vehicle system dealing with energy or power may be controlled with such controller 1, also allowing interaction between the various systems. E.g., the virtual function "e-drive", provided by the controller 1 (via the respective control module) can remove an energy source (exhaust gas) from an exhaust catalyst brick. In such a way, functions to maintain exhaust reduction and oxidisation capability may be either promoted via a priority change (adaptive prioritisation) or by triggering a higher priority function.

In the present system and method, particularly, the control modules 11, 12, 13 (or respective functions) as such are prioritized, and not transitions between said control modules or functions. Thus, a very orthogonal, modular system and method is provided, wherein autonomously operating control modules 11, 12, 13 do not overlap, and their virtual functions therefore also do not overlap in a virtual state space.

The above example is based on the controller 1 including a mutex scheduler 2 for power distribution, i.e. only one virtual function in the function tree may take control at any given time. Another type of power distribution (scheduling algorithm) that can be available is shared power distribution. This can be the case for functions "regenerate" and "hydraulic braking" (see Fig. 3), as any required power request may be shared amongst these two functions. Despite the differences between sharing and mutex, the system is functionally similar. The present embodiment can also be provided with one or more other scheduling methods for scheduling electric power related functions of the hybrid vehicle.

Also, an advantage of the present controller 1 and respective control method is that it can provides hardware independence. In the present embodiment, the layout of the controller 1 can remain the same for different hybrid vehicles (for example of different manufactures, different hybrid vehicle models, different hybrid types), wherein only the interfacing system has to be altered to allow that controller 1 to control the different vehicles.

For example, in an embodiment, output from the virtual function level of the controller (as depicted in Fig. 3) is "power". These abstract signals can be mapped to the physical hardware of the vehicle. By using abstract concepts such as "boost" and "charge", a broad range of vehicles may be controlled by the one high level control system provided by the present embodiment. The outputs can be mapped to a specific hardware configuration by the hardware interface layer (HIL) 20. This layer 20 translates higher level signals to component specific signals. For example, for each type of hybrid vehicle, a dedicated data translating interface (hardware interface layer; HIL) 20 can be provided, to allow the controller 1 to interact with that vehicle. The HIL 20 particularly exposes a standardized interface to the hardware.

Besides, since the layout of the controller 1 is of a modular design, electric power related functions can be added or removed from the controller in a simple manner, to accommodate for operation with vehicles having different (more or less) electric power related functions.

For example, as follows from the above and Fig. 2-3, the present hybrid vehicle controlling embodiment can be configured to expose energy paths through the interface 20. For example, a charge request from the vehicle is received by the interface 20. This request can include a request for vehicle kinetic energy (increase or decrease), and a battery charge request (increase or decrease). The system can be configured to map these requests onto paths, propagating the power requests back along the path engine - vehicle (drive request), and engine - electric machine - battery (charge request). Along the path, component power requests are determined, where necessary summing and clipping to component limits. These power requests are then sent through to the specific powertrain components. As follows from the above, these paths may have shared or mutex semophores, with priority pre-emption, and self limiting power restrictions from the cascade.

The present embodiment can provide fuel efficiency, for example via the ballancing of energy budgets. The controller is particularly architecture independent. The interface layer 20 can provide standardization of the controller 1, without requiring modification of vehicle hardware that is to be controlled by the controller 1. Due to the modular structure of the controller 1, functionality can be adapted to the vehicle specifications in a simple manner, and to available controller processing capacity. Also, calibration of the controller embodiment can be carried out more accurately and in a straightforward manner, due to a 'locality' of the priorities of the different virtual functions. Besides, by using a standard structure en modular design, effort to generate production-code can be reduced.

Although illustrative embodiments of the present invention have been described in greater detail with reference to the accompanying drawings, it is to be understood that the invention is not limited to these embodiments. Various changes or modifications may be effected by one skilled in the art without departing from the scope or spirit of the invention as defined in the claims.

It is to be understood that in the present application, the term "comprising" does not exclude other elements or steps. Also, each of the terms "a" and "an" does not exclude a plurality. Any reference sign(s) in the claims shall not be construed as limiting the scope of the claims. Also, a single controller, processor or other unit may fulfil functions of several means recited in the claims.

## Claims

1. Controller configured to control electric power generating and/or consuming components of a hybrid vehicle, wherein the controller (1) comprises a plurality of control modules (11, 12, 13) that are configured to control the components (C) to carry out a plurality of respective electric power generating and consuming functions, for example:
- a Charging function to generate electrical energy by driving an electric power generator of the hybrid vehicle using an engine of the vehicle;
- a Boost function to increase torque using an electromotor;
- a Regenerative braking function, which recovers vehicle kinetic energy by driving an electric power generator without using the engine; and
- an eDrive function wherein the electromotor uses electric energy to provide torque, particularly without support from the engine;
wherein each control module (11, 12, 13) is associated with one or more respective input variables, wherein the control modules (11, 12, 13) are associated with different priorities with respect to each other, wherein each of the control modules (11, 12, 13) is configured to indicate a demand for execution of the respective function depending on the one or more respective input variables,
wherein, in the case that more than one module (11, 12, 13) indicates a demand for its function's execution, the controller (1) is configured to allow the control module (11, 12, 13) to execute its function that has the highest priority of those control modules indicating the demand for their function's execution.

2. The controller according to claim 1, wherein the controller is configured such that different controller modules (11, 12, 13) can indicate demand for execution of their respective function at the same time, independently from each other, wherein the controller (1) is configured to allow only one of the control modules (11, 12, 13) to execute its function at a time.

3. The controller according to claim 1 or 2, the controller (1) comprising a main scheduler (2) or mutex scheduler, that is configured to allow only one of the control modules (11, 12, 13) to execute its respective function at a time.

4. Controller according to claim 3, the main scheduler (2) being configured to select from a number of control modules (11, 12, 13) demanding that their function is carried out, only the control module (11, 12, 13) having the highest priority to have its function carried out.

5. Controller according to claim 3 or 4, the main scheduler (2) being configured to disallow a first control module to have its function carried out, in the case that a second control module, having a higher priority than the first module, is selected to have its function carried out.

6. The controller according to any of the preceding claims, connectable to and/or comprising an interfacing structure (20) to provide communication between the controller (1) and respective remote vehicle components (C), the communication including transmission of control information from control modules to respective vehicle components and vehicle power status information to the control modules, wherein the interfacing structure (20) is preferably configured to translate vehicle status information into the specific input variables to be received by respective control modules (11, 12, 13).

7. The controller according to any of the preceding claims, wherein each control module (11, 12, 13) is configured to generate a respective activation request in the case that respective one or more input variables indicate that the respective function is in demand, wherein the controller (1) is configured to continuously or semi-continuously search for such activation requests or indications, and to keep searching after having encountered such an request.

8. The controller according to any of the claims 1-6, wherein each control module (11, 12, 13) is configured to generate a respective activation request in the case that respective one or more input variables indicate that the respective function is in demand, wherein the controller (1) is configured to be triggered by each generation of an activation request to determine, whether or not activation of the requested function is allowed based on presence of activation requests of the other control modules and based on the priorities of the control modules.

9. Controller according to any of the preceding claims, wherein the controller (1) is configured to assign or associate an energy budget to/with each of the functions, wherein the controller (1) can be configured to alter an amount of energy that is available to that function in the case that the function has used up at least part of its energy budget, and/or or can be configured to allow or deny execution of a function depending on an amount of energy used by that function.

10. The controller according to any of the preceding claims, wherein at least one of the modules, for example a Regen-module, includes a plurality of sub-modules relating to respective sub-functions, wherein the sub-modules are preferably prioritised with respect of each other whereas the sub-functions can be run in parallel.

11. The controller according to any of the preceding claims, configured to assess and control thermal energy buffers available on the vehicle, and preferably configured to adjust priorities of the control modules (11, 12, 13) based on changing thermal demands.

12. Method to control electric power generating and/or consuming components of a hybrid vehicle, the method utilizing a controller according to any of the preceding claims, wherein one or more of the control modules (11, 12, 13) can indicate a demand for execution of the respective function depending on the one or more respective input variables,
wherein, in the case that more than one module (11, 12, 13) indicates demand for its function's execution, the control module (11, 12, 13) that has the highest priority of those control modules to indicating demand for their function's execution, is allowed to execute that function.

13. The method according to claim 12, wherein only one of the control modules (11, 12, 13) is allowed to execute its function at a time.

14. The method according to claim 12 or 13 including providing an electric accumulator scheduler to schedule electric accumulator related functions based on the priorities of respective control modules.

15. The method according to any of the claims 12-14, comprising interfacing control information from the control modules (11, 12, 13) to respective vehicle components (C) and interfacing vehicle power status information from certain vehicle components (C, S) to the control modules (11, 12, 13), wherein vehicle status information is being translated into the specific input variables to be received by respective control modules (11, 12, 13).

16. The method according to any of the claims 12-15, wherein a control module (11, 12, 13) generates a respective activation request in the case that respective one or more input variables indicate that the respective function is in demand, wherein the activation request is independent of the status of the other control modules.

17. The method according to any of the claims 12-16, wherein an activation request of a control module (11, 12, 13) triggers the controller (1), wherein the triggered controller (1) determines whether or not activation of the requested function is allowed based on presence of activation requests of the other control modules and based on the priorities of the control modules.

18. The method according to any of the claims 12-17, including a mutual excusive scheduling of a plurality of functions, wherein at least one of these functions includes a plurality of sub-functions, wherein the method preferably includes a parallel scheduling of these sub-functions.

19. The method according to any of the claims 12-17, including assessment of thermal energy buffers available on the vehicle, wherein priorities of the control modules (11, 12, 13) are at least partly made dependent of thermal demands relating to those thermal bufffers.

20. Digital machine readable instructions, particularly software code, configured to cause a machine to carry out a method according to any of the claims 12-19 when executed by the machine, particularly to provide a controller according to any of claims 1-11.

21. Digital machine readable instructions according to claim 20, wherein the control modules (11, 12, 13) are embedded in the machine readable instructions.

22. Digital machine readable instructions according to claim 20 or 21, wherein at least one Mutex scheduler is embedded in the machine readable instructions.
